**Europäisches Patentamt**

**European Patent Office**

**Office européen des brevets**

(19)

(11) Veröffentlichungsnummer: **0 024 568**
**B1**

(12) **EUROPÄISCHE PATENTSCHRIFT**

(45) Veröffentlichungstag der Patentschrift:
28.09.83

(21) Anmeldenummer: 80104516.2

(22) Anmeldetag: 31.07.80

(51) Int. Cl.³: **G 01 D 7/04, B 60 K 35/00**

(54) Vorrichtung zur Anzeige des wirtschaftlichen Arbeitsbereiches einer Brennkraftmaschine.

(30) Priorität: **29.08.79 DE 2934868**

(43) Veröffentlichungstag der Anmeldung:
**11.03.81 Patentblatt 81/10**

(45) Bekanntmachung des Hinweises auf die Patenterteilung:
**28.09.83 Patentblatt 83/39**

(84) Benannte Vertragsstaaten:
**AT FR GB IT SE**

(56) Entgegenhaltungen:
**CH-A-321 171**
**DE-A-1 506 630**
**DE-A-1 573 833**
**FR-A-951 927**
**ELECTRONIC ENGINEERING, Band 50, Nr. 616, Dezember 1978, Seite 31, London, G. B. G. J. McDUFF: »LED matrix displays two variables«**

(73) Patentinhaber: **Klöckner-Humboldt-Deutz Aktiengesellschaft, Deutz-Mülheimer-Strasse 111 Postfach 80 05 09, D-5000 Köln 80 (DE)**

(72) Erfinder: **Kern, Hans, Ferdinand-Stücker-Strasse 9, D-5060 Berg.-Gladbach (DE)**

## Vorrichtung zur Anzeige des wirtschaftlichen Arbeitsbereiches einer Brennkraftmaschine

Die Erfindung bezieht sich auf eine Vorrichtung zur Anzeige des wirtschaftlichen Arbeitsbereiches einer Brennkraftmaschine, deren Augenblicksdrehzahl von einem Drehzahlmesser angezeigt wird, dessen Skala markierte Bereiche aufweist.

Drehzahlmesser werden bei Brennkraftmaschinen dafür verwendet, um anzuzeigen, ob die Brennkraftmaschine im mechanisch zulässigen Drehzahlbereich betrieben wird. Daneben kann bei Vollast von dem Drehzahlmesser abgelesen werden, ob die Brennkraftmaschine im verbrauchsgünstigen Bereich, d. h. im Bereich des höchsten Drehmoments betrieben wird.

In allen anderen Betriebsbereichen ist die Aussage des Drehzahlmessers hinsichtlich des verbrauchsoptimalen Bereichs nur bedingt brauchbar.

Aufgabe der Erfindung ist es deshalb, ausgehend von der Überwachung der Drehzahl einer Brennkraftmaschine, eine Anzeigevorrichtung zu schaffen, welche bei allen Lastzuständen der Brennkraftmaschine eine zuverlässige Aussage über das Erreichen und Verweilen im verbrauchsoptimalen Bereich gestattet.

Diese Aufgabe wird erfindungsgemäß dadurch gelöst, daß weiterhin ein Anzeigeelement für die Abgastemperatur mit einem markierten Bereich auf der zugehörigen Skala (4) vorgesehen ist, wobei sich bei Erreichen des wirtschaftlichen Bereichs sowohl die Drehzahl wie auch die Abgastemperatur jeweils in einem bevorzugten Anzeigebereich befinden, dessen Lage abhängig ist von dem Motorkennfeld der Brennkraftmaschine. Der Vorteil der Erfindung liegt darin, daß durch das Hinzufügen eines weiteren Anzeigeelements die Aussagekraft des Drehzahlmessers erweitert wird, wobei aber der bisherige Vorteil des Drehzahlmessers erhalten bleibt. Die Aufwendungen für die erfindungsgemäße Vorrichtung reduzieren sich noch, wenn eine derartige Anzeigevorrichtung für Brennkraftmaschinen verwendet wird, bei welchen die Abgastemperatur schon zu anderen Überwachungs- oder Regelfunktionen herangezogen wird, wie z. B. bei luftgekühlten Brennkraftmaschinen zur Steuerung der Kühlgebläsedrehzahl.

Wegen des notwendigen Einbauvolumens und wegen der Forderung möglichst mit einem Blick den gewünschten Informationswert der Anzeige zu erhalten, wird in einer Weiterbildung der Erfindung vorgeschlagen, beide Anzeigen in einem Gehäuse anzuordnen und dort in einer Ebene sichtbar zu machen. Hierbei ist es von Vorteil, wenn Anzeigen über Anzeigenadeln vorgesehen werden, diese derart anzuordnen und in ihrer Länge derart auszubilden, daß sie sich bei Erreichen des wirtschaftlichen Bereiches kreuzen oder überdecken. Damit wird erreicht, daß der augenblickliche Betriebszustand der Brennkraftmaschine hinsichtlich Verbrauch ohne große Konzentration oder gar Überlegung und ohne Ablesenmüssen von konkreten Werten vollständig erfaßt werden kann.

Eine andere Weiterbildung der Erfindung sieht vor, anstelle der digitalen Anzeige der Abgastemperatur eine analoge über Leuchtdioden vorzusehen. Die Leuchtdiodenanordnung hat den Vorteil, daß sie kleinbauend ist. Werden die Leuchtdioden — wie weiterhin vorgeschlagen ist — in der Drehzahlmesserskala angeordnet, und zwar in deren bevorzugtem Bereich, ist dadurch ebenfalls — trotz analoger Anzeige — eine optisch leicht erfaßbare Anzeigemöglichkeit gegeben.

Versuche haben ergeben, daß es ausreichend ist, daß das Anzeigeelement für die Abgastemperatur in Bereiche unterteilt wird, und daß jedem Bereich — wie weiterhin vorgeschlagen ist — eine Leuchtdiode zugeordnet ist. Hierbei ist es zweckmäßig, die unterste Bereichsgrenze bei 300° C und die oberste bei 600° C anzusetzen, da Abgastemperaturen außerhalb dieser Anzeigegrenzen kein wirtschaftliches Arbeiten der Brennkraftmaschine gestatten.

Im folgenden wird die Erfindung anhand eines bevorzugten Ausführungsbeispiels näher erläutert. Es stellt dar

Fig. 1 die erfindungsgemäße Anzeigevorrichtung als Zweizeigerinstrument,

Fig. 2 die erfindungsgemäße Anzeigevorrichtung als Kombination aus digitalem und analogem Anzeigegerät.

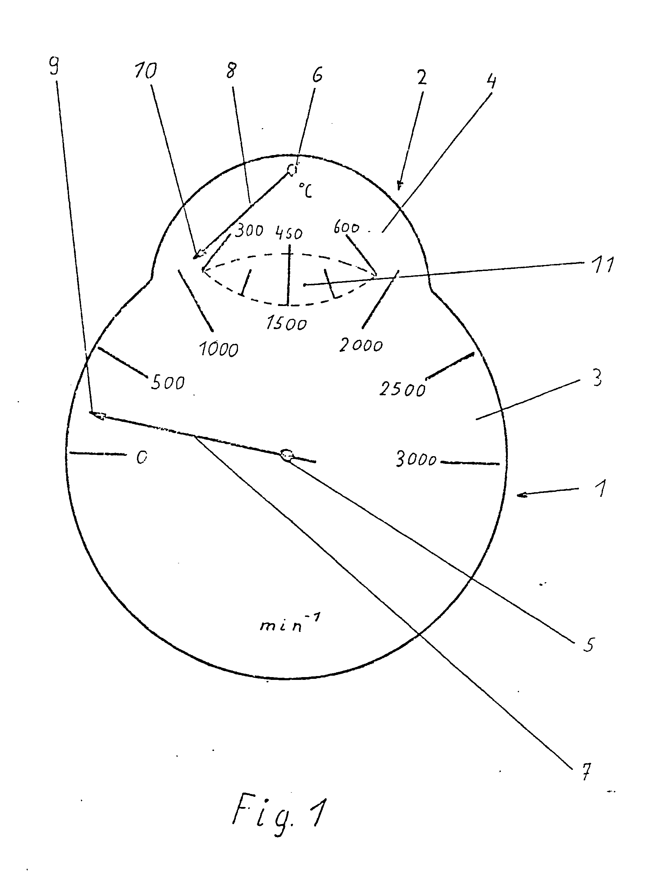

In Fig. 1 ist mit 1 das Drehzahlanzeigeelement, mit 2 das Anzeigeelement für die Abgastemperatur, mit 3 die Skala des Drehzahlanzeigeelementes 1 und mit 4 die Skala des Anzeigeelementes 2 für die Abgastemperatur bezeichnet. Wie ersichtlich, sind beide Skalen 3, 4 in einer Ebene angeordnet. Die Drehachsen 5, 6 der Anzeigenadeln 7, 8 für die Drehzahl und Abgastemperatur sind ebenfalls in einer gemeinsamen Ebene angeordnet, und zwar derart, daß sich die Anzeigenadeln 7, 8 gegenläufig bewegen können, d. h. in diesem Beispiel dreht die Anzeigenadel 7 für die Drehzahl im Uhrzeigersinn, die Anzeigenadel für die Abgastemperatur in Gegenuhrzeigersinn.

Damit ein bevorzugter Anzeigebereich 11 gebildet werden kann, sind die beiden Anzeigenadeln 7, 8 auf unterschiedlichen Höhen angeordnet. Ebenso ragt die Skala 4 für die Abgastemperatur derart überlappend in die Drehzahlskala 3 hinein, daß Kreise um die Drehachsen 5, 6 der Anzeigenadeln 7, 8 durch die Spitzen 9, 10 der Anzeigenadeln 7, 8 den bevorzugten Bereich 11 auf beiden Skalen 3, 4 begrenzen. Die Lage und die Größe des bevorzugten Bereichs 11 ist abhängig vom wirtschaftlichen Arbeitsbereich der gerade zu messenden Brennkraftmaschine. In diesem Beispiel kann die Brennkraftmaschine dann wirtschaftlich betrieben werden, wenn sich die Drehzahl im Bereich zwischen 1200 und 1900 min⁻¹ und gleichzeitig die Abgastemperatur zwischen 300°C und 600°C bewegt. Das wirtschaftliche Arbeiten der Brennkraftmaschine läßt sich mit diesem Anzeigeinstrument also daran erkennen, daß sich beide Anzeigenadeln 7, 8 im bevorzugten Bereich 11 überdecken bzw. kreuzen. Sind eine oder beide Anzeigenadeln außerhalb dieses bevorzugten Bereichs 11, arbeitet die Brennkraftmaschine nicht wirtschaftlich.

Um eine gute optische Kontrolle der beiden Anzeigeelemente zu gewährleisten, kann es sinnvoll sein, den bevorzugten Bereich 11 farbig von den übrigen Skalenbereichen abzusetzen, und zwar derart, daß sich die beiden Anzeigenadeln 7, 8 im Bereich 11 besonders gut von der Skala abheben.

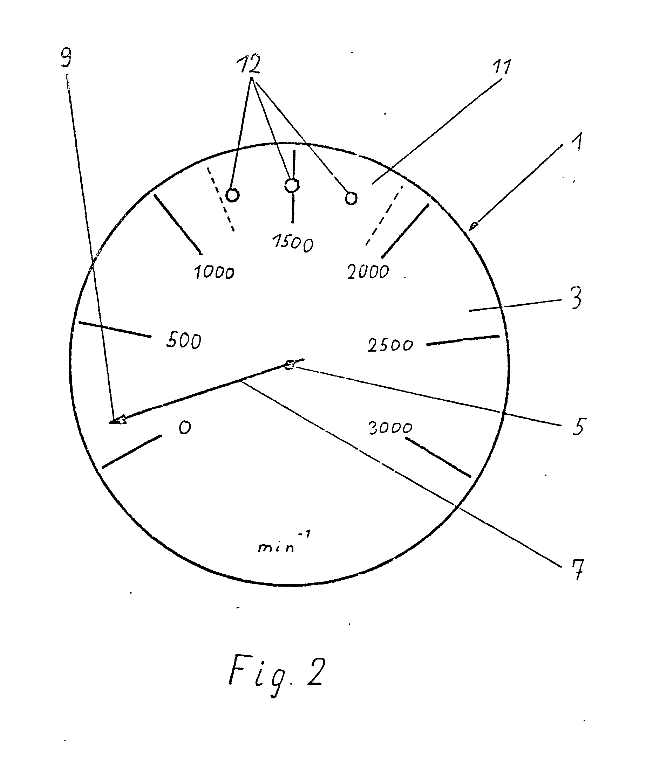

In Fig. 2 ist das Anzeigeelement 2 für die Abgastemperatur nicht mehr mit einer Anzeigenadel und einer separaten Skala 4 ausgerüstet, sondern besteht aus Leuchtdioden 12. Sie sind in dem bevorzugten Bereich 11 in der Skala 3 des Drehzahlanzeigeelementes 1 angeordnet. Versuche haben ergeben, daß es ausreichend ist, den Abgastemperaturbereich in Abschnitte zu unterteilen und jedem Abschnitt eine Leuchtdiode 12 zuzuordnen. Dies bedeutet für das hier vorliegende Beispiel, daß drei Leuchtdioden 12 in dem Drehzahlbereich von 1200 min⁻¹ angeordnet sind, wobei die in Drehrichtung der Anzeigenadeln 7 erste Diode in einem Temperaturbereich zwischen 300° und 350°C, die zweite Diode zwischen 350° und 450°C und die dritte zwischen 450° und etwa 550°C aufleuchtet.

Auch hier kann es sinnvoll sein, im bevorzugten Bereich 11 in der Skala 2 von den übrigen Skalenbereichen farbig abzusetzen, z. B. in grün, und andersfarbige Leuchtdioden, z. B. in gelb, zu verwenden. Auch ist es denkbar, die einzelnen Leuchtdioden farblich unterschiedlich auszuführen.

## Patentansprüche

1. Vorrichtung zur Anzeige des wirtschaftlichen Arbeitsbereiches einer Brennkraftmaschine, deren Augenblicksdrehzahl von einem Drehzahlanzeigeelement (1) angezeigt wird, dessen Skala (3) markierte Bereiche aufweist, dadurch gekennzeichnet, daß weiterhin ein Anzeigeelement (2) für die Abgastemperatur mit einem markierten Bereich auf der zugehörigen Skala (4) vorgesehen ist, wobei sich bei Erreichen des wirtschaftlichen Arbeitsbereiches sowohl die Drehzahl wie auch die Abgastemperatur jeweils in einem bevorzugten Anzeigebereich (11) befinden, dessen Lage abhängig ist von dem Motorkennfeld der Brennkraftmaschine.

2. Vorrichtung nach Anspruch 1, dadurch gekennzeichnet, daß das Drehzahl- (1) und das Anzeigeelement (2) für die Abgastemperatur in einem Gehäuse angeordnet sind, wobei die Skalen (3, 4) sich in einer gemeinsamen Ebene befinden.

3. Vorrichtung nach Anspruch 2, dadurch gekennzeichnet, daß sowohl das Drehzahlanzeigeelement (1) wie auch das Anzeigeelement (2) für die Abgastemperatur über Anzeigenadeln (7, 8) anzeigen, wobei die Anzeigenadeln (7, 8) derart angeordnet sind und eine derartige Länge aufweisen, daß sie sich bei Erreichen des wirtschaftlichen Arbeitsbereiches kreuzen.

4. Vorrichtung nach einem der vorangegangenen Ansprüche, dadurch gekennzeichnet, daß die Anzeige für die Abgastemperatur über Leuchtdioden (12) stattfindet.

5. Vorrichtung nach einem der vorangegangenen Ansprüche, dadurch gekennzeichnet, daß die Leuchtdioden (12) in der Drehzahlmesserskala (3) in deren bevorzugtem Anzeigebereich (11) angeordnet sind.

6. Vorrichtung nach einem der Ansprüche 4 oder 5, dadurch gekennzeichnet, daß das Anzeigeelement (2) für die Abgastemperatur in Anzeigebereiche aufgeteilt ist, wobei der gesamte Anzeigebereich zwischen 300°C und 600°C liegt.

7. Vorrichtung nach Anspruch 6, dadurch gekennzeichnet, daß für jeden Anzeigebereich eine Leuchtdiode vorgesehen ist.

## Claims

1. An instrument for indicating the economical operating range of an internal combustion engine the instant speed of rotation of which is indicated by a tachometer element (1) having a dial (3) including graduated zones, characterized in that the instrument is provided with a further indicator element (2) for indicating the exhaust gas temperature on a graduated zone of its respective dial (4), and in that, when the economical operating range has been reached, both the speed of rotation and the exhaust gas temperature register in a preferred indication zone (11) the location of which is determined by the performance data of the respective internal combustion engine.

2. An instrument according to claim 1, characterized in that the tachometer element (1) and the indicator element (2) for the exhaust gas temperature are arranged in a single casing, and in that the dials (3, 4) are contained in one and the same plane.

3. An instrument according to claim 2, characterized in that the tachometer element (1) and the indicator element (2) for the exhaust gas temperature each indicates by means of a needle (7, 8), and in that the needles (7, 8) are so disposed and their respective length is such that upon reaching the economical operating range they cross one another.

4. An instrument according to any of the preceding claims, characterized in that the exhaust gas temperature is indicated by light-emitting diodes (12).

0 024 568

5. An instrument according to any of the preceding claims, characterized in that the light-emitting diodes (12) are arranged in the preferred indication zone (11) of the tachometer dial (3).

6. An instrument according to claim 4 or claim 5, characterized in that the indicator element (2) for the exhaust gas temperature is divided into indication zones which together indicate temperatures of between 300° C and 600° C.

7. An instrument according to claim 6, characterized in that a light-emitting diode is provided for each indication zone.

**Revendications**

1. Dispositif pour afficher la plage de fonctionnement économique d'un moteur à combustion interne dont la vitesse de rotation instantanée est affichée par un élément d'affichage de vitesse (1) dont l'échelle (3) comporte des plages repérées, dispositif caractérisé en ce qu'en outre il est prévu en élément d'affichage (2) pour la température des gaz d'échappement, cet élément comportant une plage marquée sur l'échelle (4) correspondante, et lorsqu'on atteint la plage de fonctionnement économique à la fois la vitesse de rotation et la température des gaz d'échappement se trouvent dans la plage d'affichage préférentielle (11) dont la position dépend des caractéristiques du moteur à combustion interne correspondant.

2. Dispositif selon la revendication 1, caractérisé en ce que la vitesse de rotation (1) et l'élément d'affichage (2) de la température des gaz d'échappement sont prévus dans un boîtier et les échelles (3, 4) se trouvent dans un même plan.

3. Dispositif selon la revendication 2, caractérisé en ce qu'à la fois l'élément d'affichage de la vitesse de rotation (1) (tachymètre) et l'élément d'affichage (2) de la température des gaz d'échappement comportent des aiguilles d'affichage (7, 8) et ces aiguilles d'affichage (7, 8) sont disposées de façon que leur longueur soit telle que les aiguilles se croisent pour la plage de fonctionnement économique.

4. Dispositif selon l'une quelconque des revendications précédentes, caractérisé en ce que l'affichage de la température des gaz d'échappement est réalisé par des diodes électroluminescentes (12).

5. Dispositif selon l'une quelconque des revendications précédentes, caractérisé en ce que les diodes électroluminescentes (12) sont prévues sur l'échelle (3) du tachymètre au niveau de la plage d'affichage préférentielle (11).

6. Dispositif selon l'une quelconque des revendications 4 et 5, caractérisé en ce que l'élément d'affichage (2) correspondant à la température des gaz d'échappement est subdivisé en plages d'affichage et l'ensemble de la plage d'affichage se situe entre 300° C et 600° C.

7. Dispositif selon la revendication 6, caractérisé en ce qu'il est prévu une diode électroluminescente pour chaque plage d'affichage.

Fig. 1

Fig. 2